# NEUE EUROPÄISCHE PATENTSCHRIFT

(11) **EP 3 604 876 B2**
(45) Veröffentlichungstag und Bekanntmachung des Hinweises auf die Entscheidung über den Einspruch: **03.04.2024**
(45) Hinweis auf die Patenterteilung: 10.03.2021
(21) Anmeldenummer: 18187184.9
(22) Anmeldetag: 03.08.2018
(51) Int. Cl.: F16K 37/00, F04B 43/00, F16J 3/02, F16K 7/12, G01M 99/00, F04B 51/00

(54) **MEMBRANDIAGNOSE ÜBER LUFTSCHNITTSTELLE**
MEMBRANE DIAGNOSIS VIA AIR INTERFACE
DIAGNOSTIC DE MEMBRANE À L'AIDE DE L'INTERFACE AÉRIENNE

(43) Veröffentlichungstag der Anmeldung: 05.02.2020
(73) Patentinhaber: SISTO Armaturen S.A., 6468 Echternach (LU)
(72) Erfinder: Hackenberger, Bernd, 6468 Echternach (LU)
(74) Vertreter: Busch, Tobias

(56) Entgegenhaltungen:
- EP-A1- 0 732 501
- EP-A1- 3 604 876
- EP-B1- 0 715 690
- EP-B1- 1 479 910
- EP-B1- 1 694 989
- EP-B1- 2 459 911
- EP-B1- 2 812 577
- EP-B1- 3 025 077
- WO-A1-2005/036039
- WO-A1-2012/021412
- WO-A1-2017/140418
- DE-A1- 4 446 304
- DE-A1- 10 024 118
- DE-A1- 19 925 508
- DE-A1-102006 039 501
- DE-A1-102009 023 012
- DE-A1-102009 052 244
- DE-A1-102010 049 564
- DE-A1-102014 205 117
- DE-A1-102015 210 204
- DE-A1-102015 210 210
- DE-A1-102016 001 806
- DE-A1-102017 131 101
- DE-B4- 19 829 084
- DE-U1- 20 206 914
- JP-A- 2002 168 176
- KR-A- 20150 008 670
- US-A- 4 569 634
- US-A- 4 781 535
- US-A1- 2008 202 606
- US-A1- 2016 123 497
- US-A1- 2017 005 406
- US-B2- 8 874 383

## Beschreibung

Die Erfindung betrifft ein Verfahren und eine Einheit zur Diagnose von Membranen in Ventilen oder Pumpen.

Die Überwachung oder Diagnose von Membranen in Ventilen und Pumpen ist insbesondere in kritischen Bereichen der sterilen Verfahrenstechnik ein deutlicher Schwerpunkt, dem im Wesentlichen durch vorsorgende Maßnahmen begegnet wird, da fortlaufend gemessene Zustandsgrößen weitestgehend nicht verfügbar sind. Messungen während des laufenden Betriebes sind teilweise nur schwer möglich. Anlagen müssen oft in allen Details steril reinigbar aufgebaut sein, weshalb übliche elektrische Stecker Anordnungen ungünstig sind.

In der DE 10 2015 210 204 A1 wird ein Verfahren und eine Vorrichtung zum Auslesen und Sammeln von Daten aus einer Membran beschrieben.

Die DE 10 2015 210 210 A1 beschreibt ein Verfahren und eine Vorrichtung zur Diagnose eines Membranventils.

Die DE 10 2015 210 208 A1 beschreibt die Ermittlung von Zustandsgrößen bei Ventilmembranen

WO 2017140418 A1 offenbart eine Vorrichtung zur Diagnose einer Membran eines Membranventils nach dem Oberbegriff des Anspruchs 1.

Aufgabe der Erfindung ist es, eine Erfassung von Zustandsgrößen einer Membran für Ventile und Pumpen zu schaffen, bei der mindestens ein Sensor zur Ermittlung von mindestens einer Zustandsgröße und eine Übermittlung zu einem externen Erfassungsmittel vorgesehen sind.

Diese Aufgabe wird erfindungsgemäß durch eine Vorrichtung mit den Merkmalen des Anspruchs 1 gelöst.

Bei der Vorrichtung zur Diagnose einer Membran eines Membranventils oder einer Membranpumpe umfassend ein erstes Bauteil, bestehend aus einer in einem Gehäuse vorgesehenen Membran, wobei ein Teil der Membran aus dem Gehäuse herausragt, und ein zweites Bauteil, bestehend aus einem Datenerfassungsgerät, wobei in der Membran ein Sensor zur Erfassung von Betriebsparametern vorgesehen ist, wobei in der Membran ein Mittel zur elektromagnetischen Nahfeldkommunikation mit dem Datenerfassungsgerät vorgesehen ist. Von Vorteil ist dabei, dass das erste und das zweite Bauteil voneinander getrennt sind, wodurch es einfach, universell und kostengünstig konstruierbar ist.

Die erfindungsgemäße Vorrichtung ist in der Membran als eine mechanische Verstärkungsstruktur vorgesehen, wobei die mechanische Verstärkungsstruktur aus elektrisch leitfähigem Material ausgeführt ist. Dies hat den Vorteil, dass mit einer Struktur, die in die Membran eingearbeitet ist, mehrere Zwecke verbunden werden. Auch hier zeigt sich der Vorteil bei der Einfachheit und den Kosten der Herstellung der Membran.

Nach der Erfindung weist die Verstärkung die Eigenschaften eines Sensors auf. Vorteilhaft ist dabei, dass sich Zustandsgrößen direkt in der Membran ermitteln lassen.

In einer weiteren Ausgestaltung weist die Verstärkungsstruktur Eigenschaften einer Nahfeldkommunikationsantenne auf. Der Vorteil dabei ist, dass die metallisch leitende Verstärkungsstruktur in ihren Dimensionen so ausgestaltet ist, dass sie für den Empfang und das Senden von Funksignalen vorbereitet ist.

Die Erfindung umfasst weiter ein Verfahren zur Erfassung von Betriebsparametern einer Membran eines Membranventils oder einer Membranpumpe mittels einer erfindungsgemäßen, beschriebenen Vorrichtung, wobei in einem ersten Schritt das Datenerfassungsgerät in elektromagnetischen Kontakt mit der Nahfeldkommunikationsantenne gebracht wird, in einem zweiten Schritt eine Energieübertagung von dem Datenerfassungsgerät in die Membran stattfindet, wobei mittels der übertragenen Energie der Sensor aktiviert und eine Messung ausgeführt wird, in einem dritten Schritt die Messdaten mittels elektromagnetischer Nahfeldkommunikation auf das Datenerfassungsgerät übertragen werden.

Vorteil hierbei ist, dass in der Membran keine eigene Energiequelle benötigt wird. Die Membran kann einfach und kostengünstig hergestellt werden, die Erfassung von Zustandsgrößen ist einfach, schnell und sicher durchführbar. Insbesondere ist die Sicherheit bei einer derartigen Nahfeldkommunikation erhöht, da keine weitreichenden Funksignale verwendet werden.

Durch die drahtlose Übertragung von Energie und Informationen werden keine Kabelverbindung und kein Stecksystem benötigt. Daher muss dieses auch nicht entsprechend der Anforderungen des Einsatzbereiches ausgeführt werden. Weiterhin entsteht beim Membranwechsel keine erhöhter Aufwand durch das Anstecken der Membran an die Auswerteeinheit.

Je nach Anwendungsfall kann entschieden werden ob die Membran kontinuierlich oder intervallbasiert überwacht werden soll. Die kontinuierliche Überwachung eignet sich für kritische und hochbelastete Geräte. Die intervallbasierte Überwachung kann mit einem mobilen Handgerät erfolgen. In diesem Fall wird die Auswerteeinheit nur einmalig benötigt.

Weitere Merkmale und Vorteile der Erfindung ergeben sich aus der Beschreibung von Ausführungsbeispielen anhand von Zeichnungen und aus den Zeichnungen selbst.

Dabei zeigt:
Figur 1 eine erfindungsgemäße Datenübertragungsvorrichtung,
Figur 2 eine erste Ausführungsform zur Anwendung der erfindungsgemäßen Datenübertragung und
Figur 3 eine weitere Ausführungsform zur Anwendung der erfindungsgemäßen Datenübertragung.

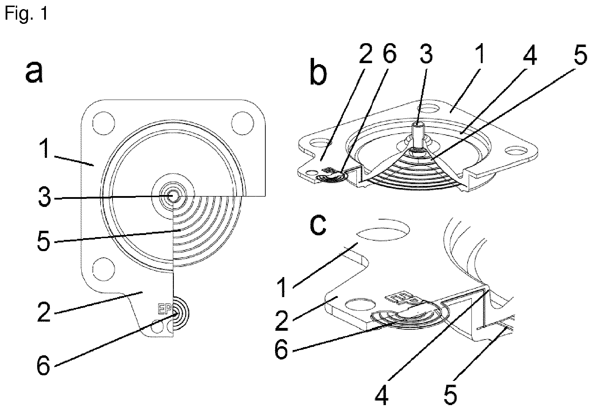

Figur 1 zeigt eine Membran 1, wie sie beispielsweise in einem Membranventil zur Anwendung kommt. Die Membran 1 verfügt über einen sogenannten Lappen 2 und eine Schraube 3. Bei der dargestellten Membran liegt eine spezielle Form vor, die durch eine Kammerung 4 für zusätzliche Vorteile sorgt. In den Figuren 1b und 1c ist diese Kammerung 4 an der entsprechenden Stufe in der Membran 1 zu erkennen.

Die Membran 1 wird in einem Ventilgehäuse befestigt und durch einen an der Schraube 3 befestigten Aktor bewegt, wodurch sich das Ventil öffnen oder schließen lässt.

In einer erfindungsgemäßen Membran 1 ist eine Verstärkungsstruktur in Form einer Spule aus einem elektrisch leitfähigen Material vorgesehen, die als Sensor 5 zur Erfassung von Zustandsgrößen auf der Fluidseite der Membran geeignet ist. Dieser Sensor 5 kann direkt durch ein externes elektromagnetisches Wechselfeld angesprochen werden, indem Wechselwirkungen eines von außen angelegten Feldes mit dem Sensor ausgewertet werden.

Die Figur 1 zeigt weiter eine zusätzliche Kontaktspule 6, die im Lappen 2 angeordnet ist. Diese Spule kann die beschriebene Wechselwirkung eines äußeren elektromagnetischen Feldes mit der Sensorspule stark verbessern, insbesondere wenn die Membran in der Anwendung im Ventilgehäuse elektromagnetisch abgeschirmt ist.

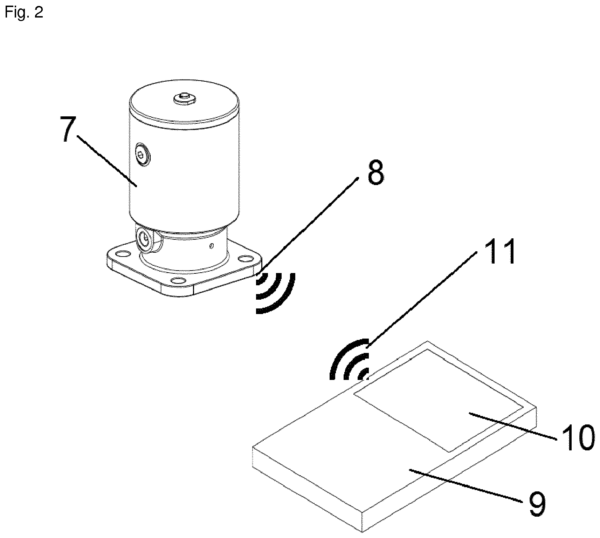

Die Figur 2 zeigt eine Anordnung einer erfindungsgemäßen Vorrichtung zur Diagnose einer Membran in einem Membranventil 7. Die Membran ist im unteren Teil des Membranventils 7 angeordnet. Dort befinden sich auch die entsprechenden Spulen zur Erfassung der Zustandsgrößen und eventuell zur Verbesserung der Signalübertragung. Durch eine externe Auswerteeinheit 9 mit einem entsprechenden Anzeigemittel 10 wird durch ein Empfangssignal 11 elektromagnetisch Energie auf die Kontaktspule in der Membran übertragen. Diese liefert die Voraussetzung für eine Messung mindestens einer Zustandsgröße in der Membran 1, die wiederum durch das Sendesignal 8 an die Auswerteeinheit 9 zurückgesendet wird. Dort wird das empfangene Signal ausgewertet und der Wert der entsprechenden Zustandsgröße auf der Anzeigeeinheit 10 ausgegeben.

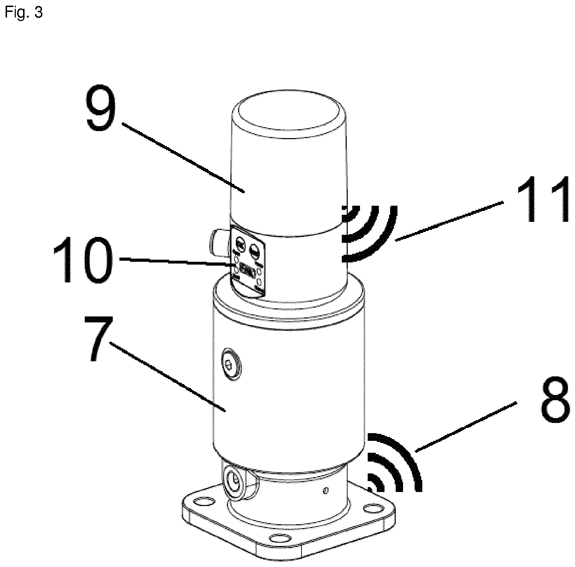

Die Figur 3 zeigt einen vergleichbaren Aufbau, wobei hier die Auswerteeinheit 9 mit dem Anzeigemittel 10 direkt mit dem Membranventil 7 fest verbunden ist. Der Kontakt zwischen der Membran 1 und der Auswerteeinheit 9 erfolgt auch hier durch ein Sendesignal 8 aus der Membran und ein Empfangssignal 11 an der Auswerteeinheit.

**Bezugszeichenliste:**

| | | | |
|---|---|---|---|
| 1 | Membran | 8 | Sendesignal |
| 2 | Lappen | 9 | Auswerteeinheit |
| 3 | Schraube | 10 | Anzeigemittel |
| 4 | Kammerung | 11 | Empfangssignal |
| 5 | Sensor | | |
| 6 | Kontaktspule | | |
| 7 | Membranventil | | |

## Patentansprüche

1. Vorrichtung zur Diagnose einer Membran (1) eines Membranventils (7) oder einer Membranpumpe umfassend ein Gehäuse, ein erstes Bauteil, bestehend aus einer in dem Gehäuse vorgesehenen Membran, wobei ein Teil der Membran aus dem Gehäuse als Lappen (2) herausragt, und ein zweites Bauteil, bestehend aus einem Datenerfassungsgerät wobei in der Membran (1) mindestens ein Sensor (5) zur Erfassung von Betriebsparametern vorgesehen ist, wobei in der Membran (1) mindestens ein Mittel zur elektromagnetischen Nahfeldkommunikation mit dem Datenerfassungsgerät (9) vorgesehen ist, wobei in der Membran (1) eine mechanische Verstärkungsstruktur vorgesehen ist und die mechanische Verstärkungsstruktur aus elektrisch leitfähigem Material ausgeführt ist, wobei die Verstärkungsstruktur die Eigenschaften eines Sensors (5) aufweist, **dadurch gekennzeichnet, dass** die Verstärkungsstruktur in Form einer Spule ausgestaltet ist, die als der Sensor (5) zur Erfassung von Zustandsgrößen auf einer Fluidseite der Membran geeignet ist und dass weiter eine zusätzliche Kontaktspule (6) im Lappen (2) angeordnet ist

2. Verfahren zur Erfassung von Betriebsparametern einer Membran (1) eines Membranventils (7) oder einer Membranpumpe mittels einer Vorrichtung nach Anspruch 1, **dadurch gekennzeichnet, dass** in einem ersten Schritt das Datenerfassungsgerät (9) in elektromagnetischen Kontakt mit der Nahfeldkommunikationsantenne (6) gebracht wird, in einem zweiten Schritt eine Energieübertagung von dem Datenerfassungsgerät (9) in die Membran (1) stattfindet, wobei mittels der übertragenen Energie der Sensor (5) aktiviert und eine Messung ausgeführt wird, in einem dritten Schritt die Messdaten mittels elektromagnetischer Nahfeldkommunikation auf das Datenerfassungsgerät (9) übertragen werden.

## Claims

1. An apparatus for diagnosing a diaphragm (1) of a diaphragm valve (7) or a diaphragm pump, comprising a housing, a first component consisting of a diaphragm provided in the housing, wherein a part of the diaphragm projects from the housing as a flap (2), and a second component consisting of a data capture device, wherein at least one sensor (5) for capturing operating parameters is provided in the diaphragm (1), wherein at least one means for electromagnetic near-field communication with the data capture device (9) is provided in the diaphragm (1), wherein a mechanical reinforcement structure is provided in the diaphragm (1) and the mechanical reinforcement structure is made of electrically conductive material wherein the reinforcement structure has the properties of a sensor (5), **characterised in that** the reinforcement structure is designed in the form of a coil which, as the sensor (5), is suitable for capturing state variables on a fluid side of the diaphragm, and **in that** an additional contact coil (6) is also arranged in the flap (2).

2. Method for capturing operating parameters of a diaphragm (1) of a diaphragm valve (7) or a diaphragm pump by means of an apparatus according to claim 1, **characterised in that** in a first step, the data capture device (9) is brought into electromagnetic contact with the near-field communication antenna (6), in a second step, energy is transferred from the data capture device (9) into the diaphragm (1), the sensor (5) is activated by means of the transferred energy and a measurement is carried out, in a third step, the measurement data are transferred to the data capture device (9) by means of electromagnetic near-field communication.

## Revendications

1. Dispositif permettant de diagnostiquer une membrane (1) d'une soupape à membrane (7) ou d'une pompe à membrane, comprenant un boîtier, un premier composant composé d'une membrane prévue dans un boîtier, une partie de la membrane dépassant du boîtier sous forme de languette, et un deuxième composant composé d'un appareil d'acquisition de données, au moins un capteur (5) permettant d'acquérir des paramètres de fonctionnement étant prévu dans la membrane (1), au moins un moyen pour la communication électromagnétique en champ proche avec l'appareil d'acquisition de données (9) est prévu, une structure de renforcement mécanique est prévue dans la membrane (1), et la structure de renforcement mécanique est réalisée en un matériau électriquement conducteur, la structure de renforcement présentant les propriétés d'un capteur (5) **caractérisée en ce que** la structure de renforcement est réalisée sous la forme d'une bobine qui, en tant que capteur (5), convient à la détection de grandeurs d'état sur un côté fluide de la membrane, et **en ce qu'**en outre une bobine de contact (6) supplémentaire est disposée avec la languette (2).

2. Procédé permettant d'acquérir des paramètres de fonctionnement d'une membrane (1) d'une soupape à membrane (7) ou d'une pompe à membrane au moyen d'un dispositif selon la revendication 1, **caractérisé en ce que** dans une première étape, l'appareil d'acquisition de données (9) est mis en contact électromagnétique avec l'antenne (6) de communication en champ proche, dans une deuxième étape, une transmission d'énergie de l'appareil d'acquisition de données (9) à la membrane (1) a lieu, l'énergie transmise permettant d'activer le capteur (5) et d'effectuer une mesure, dans une troisième étape, les données de mesure sont transmises à l'appareil d'acquisition de données (9) au moyen d'une communication électromagnétique en champ proche.
